# EUROPEAN PATENT APPLICATION

(11) **EP 2 634 672 A1**
(43) Date of publication of application: **04.09.2013**
(21) Application number: 12305237.5
(22) Date of filing: 28.02.2012
(51) Int. Cl.: G06F 3/023, G06F 3/048

(54) **System and method for inputting symbols**

(71) Applicant: Alcatel Lucent, 75007 Paris (FR)
(72) Inventor: Lou, Zhe, 2640 Mortsel (BE); Moons, Jan, 2220 Heist-op-den-Berg (BE)
(74) Representative: D'Halleweyn, Nele Veerle Trees Gertrudis

(57) **Abstract**

System for inputting symbols, such as letters or numbers, using fingers, comprising: a key coupled with a plurality of symbols; a recognizer adapted for determining a type of a finger pressing a key area coupled to said key; a selector adapted for selecting a symbol of said plurality of symbols based on the determined finger type.

## Description

### Technical field

The field of the invention relates to systems and methods for inputting symbols, in particular keyboard systems, more in particular virtual keyboard systems.

### Background

Devices with a touch screen have gained in popularity through the last couple of years. Nowadays, smart phones, mobile phones, tablets and PC's may all have multi touch screens. Those smart phones, mobile phones and tablets are often not equipped with a traditional keyboard. Instead, a soft keyboard is provided on the touch screen when needed. However, compared with typing on a real keyboard, the results of a soft keyboard often lead to more errors and a lower typing speed.

### Summary

According to embodiments of the invention, there is provided a keyboard system which can be used for soft keyboards and which reduces the number of errors and/or increases the typing speed.

According to a first aspect of the invention, there is provided a system for inputting symbols, such as letters or numbers, using fingers. The system comprises a key coupled with a plurality of symbols; a recognizer adapted for determining a type of a finger pressing a key area coupled to said key; and a selector adapted for selecting a symbol of said plurality of symbols based on the determined finger type.

According to a first type of embodiments, such a system is used in a keyboard where key areas of adjacent keys may overlap and where the symbol is determined by using the type of finger that touched the key area. E.g. in case of an AZERTY keyboard, the key Z may be coupled to the symbols A, Z and E, and the key area coupled to key A may overlap with the key area of key Z, since the determination of the typed symbol can be done using the type of the finger that has touched an area of overlap, i.e. in this example the little finger will lead to a conclusion that the symbol A is typed and the ring finger will lead to the conclusion that the symbol Z is typed. According to other embodiments, the key areas do not overlap, but depending on the type of finger that touches a key area, it is determined which symbol is typed.

According to a preferred embodiment, the recognizer comprises a fingerprint identification means adapted to take a digital image of a fingerprint of a finger touching the key area. Using finger prints, the type of finger can be uniquely determined. However, note that other techniques which do not use fingerprints but rather use images of the fingers obtained through camera's may also be used.

According to a preferred embodiment, the recognizer is adapted to determine the type of a finger pressing the key area as being one of the following: thumb, index, middle finger, ring finger, little finger. Preferably, it is further determined whether such a finger belongs to the left hand or the right hand. In case of an AZERTY or QWERTY keyboard, it may in particular be advantageous if it is determined whether the index finger belongs to the left hand or the right hand. In case of a AZERTY or QWERTY keyboard, this will allow e.g. to determine more easily whether the letter G or H was typed.

According to a preferred embodiment, the key is meant to be part of a keyboard, and is meant to be adjacent a number of other keys of the keyboard. Assuming that each other key is coupled with at least a primary symbol, the plurality of symbols coupled with the key preferably comprises at least its own primary symbol as well as the primary symbols of the other keys. In case of a QWERTY or AZERTY keyboard, the number of adjacent keys will typically be adjacent keys on the same line, i.e. keys which are not touched with the same type of finger, e.g. for key D, the adjacent keys will be keys S and F.

According to a preferred embodiment, the system comprises a touch screen on which the key is provided in the form of a soft or virtual key.

According to a preferred embodiment the system further comprises position determining means adapted to determine a position of a finger in the key area. The selector may then be further adapted for doing the selecting of a symbol of said plurality of symbols based on the determined position.

According to a second aspect there is provided a method for inputting symbols, such as letters or numbers, using fingers. The method comprises providing a key coupled with a plurality of symbols; determining a type of a finger pressing a key area coupled to said key; and selecting a symbol of said plurality of symbols based on the determined finger type.

According to a preferred embodiment said determining a type of a finger is done using finger print identification.

According to a preferred embodiment the type of a finger pressing the key area is determined as being one of the following: thumb, index, middle finger, ring finger, little finger; and/or as belonging to a left hand or a right hand.

According to a preferred embodiment a keyboard comprising a first key is provided, said keyboard comprising a number of other keys adjacent said first key, each other key being coupled with at least a primary symbol. In such a case the plurality of symbols coupled with said first key preferably comprises at least a primary symbol and the primary symbols of said other adjacent keys.

According to a preferred embodiment the method further comprises determining a position of a finger in the key area. The selecting of a symbol of said plurality of symbols may then be further based on the determined position.

According to a third aspect of the invention there is provided a keyboard system for inputting symbols, such as letters of numbers, using fingers. The system comprises a keyboard comprising a plurality of keys; a recognizer adapted for determining, a type of a finger pressing a keyboard area coupled to said keyboard; a selector adapted for selecting a symbol of a plurality of symbols associated with the plurality of keys based on the determined finger type.

According to a preferred embodiment, the keyboard system further comprises a position determining means adapted to determine a position of a finger in the keyboard area. The selector is then preferably further adapted for selecting a symbol of said plurality of symbols based on the determined position and the determined type of finger.

### Brief description of the figures

The accompanying drawings are used to illustrate presently preferred non limiting exemplary embodiments of systems and methods of the present invention. The above and other advantages of the features and objects of the invention will become more apparent and the invention will be better understood from the following detailed description when read in conjunction with the accompanying drawings in which:
Figure 1A illustrates an embodiment of the invention for a QUERTY keyboard;
Figure 1B illustrates another example of a keyboard which can be included in an embodiment of the invention;
Figure 2 illustrates an embodiment of a system according to the invention; and
Figure 3 is a flowchart illustrating an embodiment of the method of the invention.

### Detailed description

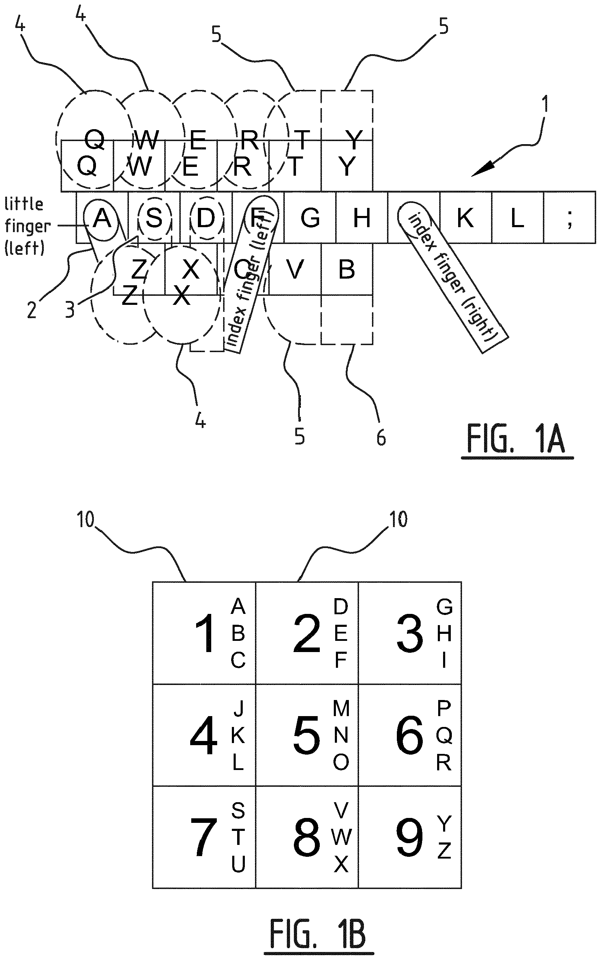

Figure 1 illustrates a first embodiment where a soft QWERTY keyboard is used. The problems with the existing soft keyboards come from the size of the touch screen. A device with a touch screen is relatively small compared to a standard keyboard, leading to smaller keys and/or smaller intervals between keys. Further, no hard borders are provided between adjacent keys. This increases the probability of mistyping by pressing the wrong key or by pressing two keys at the same time.

A QWERTY keyboard comprises a reference row 1 with letters A, S, D, F, G, H, J, K, L as illustrated in figure 1A. When typing according to the rules, the letter A is controlled by the little finger 2 of the left hand; the letter S is controlled by the ring finger 3 of the left hand; etc. For each key of the keyboard there is defined a key area 4. For the keys comprised in the line containing the letters Q, W, E, R, T, Y, there may be defined respective key areas 4, 5 which are significantly larger than the keys. If it is determined that the little finger touches the area 4 coupled with Q, it decides that the symbol Q is typed. The key area coupled with Q will at least overlap with the key area coupled with W, and if the ring finger touches the overlap zone between the area coupled with Q and the area coupled with W, then it will be determined that the symbol W is typed. For the letters of the reference row 1, an area coupled with key A may extend over key S, so that if the little finger touches key S in an area coupled with A, it is determined that letter A is typed, and not letter S. Similar considerations apply for the other keys which are meant to be touched by the little finger, the ring finger, the middle finger or the index. For the index finger the situation is slightly more complex, because it controls more than three keys. For example, for the letters T and Y the areas 5 coupled to those keys may not overlap, because otherwise it could not be determined whether a symbol typed is a T or a Y. However, those areas 5 may be user defined depending on the typing style of the user.

Note that the areas 4 and 5 in figure 1A are merely for illustration purposes. Typically, the areas 4 could be much bigger than illustrated. For example, it could be defined that, if the little finger of the left hand touches an area above the top line delimiting the keys of reference row 1, than it is determined that the letter Q is typed. Similarly, the algorithm could be such that if the little finger of the left hand touches an area below a bottom line of the keys of reference row 1, than it is determined that the letter Z is typed. Also, the algorithm could be such that if the little finger of the left hand touches an area in the reference row 1, than it is determined that the letter A is typed. Similar considerations apply for the other keys above the top line, below the bottom line, or in the reference row typed by a ring finger or a middle finger.

The skilled person will understand that the keys do not necessarily have to be shown on the touch screen. E.g. it is also possible to merely show three rows or some contours of the keyboard, especially for users that can type blindly.

Such embodiments has numerous advantages. Users do not need to be very precise when typing. For example, as long as the little finger of the left hand touches an area above key A, it is determined that letter Q is typed. It will not be determined that letter W or E is typed. Hence, mistyping between letter Q and letter W is avoided. Similar considerations apply for other adjacent letters. Further, by allowing a user to define areas coupled with a certain key, the keyboard can be personalized.

In summary, for the embodiment of figure 1, for each key there is defined a plurality of symbols and a key area 4, 5. Depending on the type of finger touching such a key area 4, 5, a symbol of the plurality of symbols is selected. For example:
- key A is coupled with symbols A and S; if a little finger touches the key area of A, it is determined that letter A is typed, while if the ring finger touches the key area of A, it is determined that letter S is typed;
- for letter Q, the key area could be defined as the whole area above letter A; further, key Q may e.g. be coupled with symbols Q, W, E, R; depending on whether the area for Q is touched with the little finger, the ring finger, the middle finger, the index, respectively, it is determined that the letter typed is a Q, a W, an E or an R.

The skilled person will understand that the key areas may be defined in many different ways, and that the examples given above are not limitative. Further, in certain embodiments the key areas may be user-definable.

Figure 1B illustrates a second embodiment of the invention. In this embodiment, the keyboard consists of nine keys 10. Each key 10 is coupled with a plurality of symbols. E.g. a first key is coupled with symbols 1, A, B, C. A first key is coupled with symbols 2, D, E, F, etc. In this embodiment, a particular key in combination with a particular finger will determine which symbol to select. For example, if the first key is touched with the index, it is determined that 1 is typed. If the first key is touched with the middle finger, it is determined that A is typed. If the first key is touched with the ring finger, it is determined that B is typed, and if the first key is touched with the little finger, it is determined that C is typed. Similar links may be defined for the second and further keys.

By using a single key for typing multiple different symbols, fewer keys are needed, and the keys can be made bigger, again reducing the chances of typing errors.

The skilled person will understand that although figure 1B illustrates an example with nine keys, other examples with more or less than nine keys and more or less symbols are also envisaged. Further, more or less symbols may be coupled with each key.

Where figure 1B illustrates an example where the key areas correspond with the borders of the keys, figure 1A is an example where overlapping key areas are used. Also, keyboards combining those two possibilities fall within the framework of the present invention.

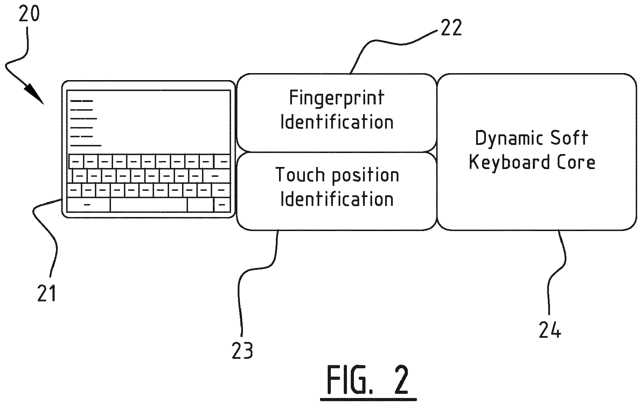

Figure 2 illustrates an embodiment of a system for inputting symbols according to the invention. The system comprises a soft keyboard 20 with a plurality of keys 21. Further, there is provided a recognizer 22 adapted for determining a type of a finger which presses a key area coupled to a key of the plurality of keys.

In the illustrated embodiment, the recognizer 22 is a fingerprint identification means adapted for determining the type of finger by deriving the fingerprint. According to an embodiment of the fingerprint identification means, the touch surface of the soft keyboard is equipped with fingerprint sensors adapted to capture the digital images of a fingerprint pattern of a finger touching the keyboard. Examples of commonly used fingerprint sensor technologies are optical fingerprint sensors, ultrasonic sensors, capacitance sensors including passive capacitance sensors or active capacitance sensors. Further, the fingerprint identification means comprises software and/or hardware to perform a matching algorithm to detect which finger is touching the surface using the retrieved digital image of the fingerprint. The matching algorithm may e.g. use a minutia matching or pattern matching.

The embodiment of the system of figure 2 also comprises a position determining means in the form of a touch position identification means 23. The touch position identification means is adapted to determine a position of a finger touching the keyboard. The touch position identification technique is a mature technology that is well known to the skilled person and that is used in many single touch and multi touch devices. For this reason, a detailed description is not given.

The fingerprint determined by the fingerprint identification means 22 and the touch position determined by the touch position identification means are fed into a dynamic soft keyboard core 24. The dynamic soft keyboard core is typically implemented in software. The dynamic soft keyboard core 24 is adapted to determine a typed symbol using the determined fingerprint and the determined touch position.

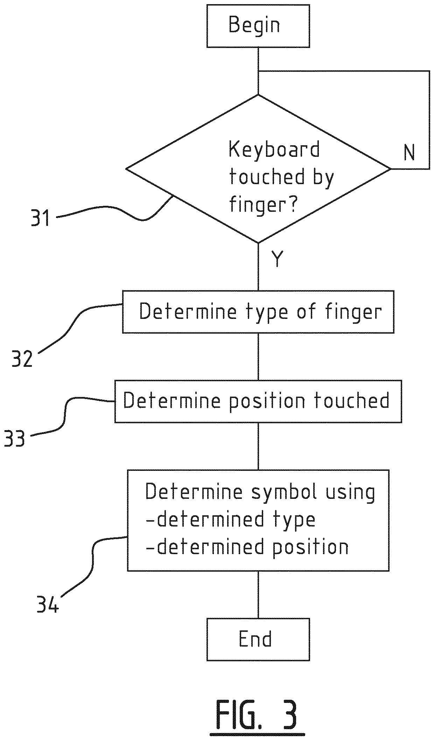

An embodiment of the method of the invention is schematically illustrated in figure 3. In a first step 31, it is determined if a keyboard is touched by a finger. If touching by a finger is sensed, it is determined in step 32 which type of finger has touched the keyboard. In step 33, it is determined at which position the keyboard was touched. Note that it may be sufficient to determine which key areas are touched, and that it is not necessary to determine the exact position. Step 33 may be performed before step 32 or at the same time as step 32. Based on the determined type of finger and the determined position/key areas, it is determined in step 34 which symbol is typed. For the example of figure 1B, it may e.g. be determined that the key area of the first key was touched with the little finger. In that case, symbol C is selected from symbols 1 A B and C. Similarly, for the example of figure 1A, it may be determined that an area above the keys of the reference row 1 was touched with the ring finger of the left hand. In that case, it will be determined that the letter W was typed.

The exemplary embodiments disclosed above have been focussing on letter typing. However, the skilled person understands that the invention is equally applicable with other types of symbols such as numbers,!@#$%, etc.

Whilst the principles of the invention have been set out above in connection with specific embodiments, it is to be understood that this description is merely made by way of example and not as a limitation of the scope of protection which is determined by the appended claims.

## Claims

1. System for inputting symbols, such as letters or numbers, using fingers, comprising:
a key coupled with a plurality of symbols;
a recognizer adapted for determining a type of a finger pressing a key area coupled to said key;
a selector adapted for selecting a symbol of said plurality of symbols based on the determined finger type.

2. System of claim 1, wherein said recognizer comprises a fingerprint identification means adapted to take a digital image of a fingerprint of a finger touching the key area.

3. System of any of the previous claims, wherein said recognizer is adapted to determine the type of a finger pressing the key area as being one of the following: thumb, index, middle finger, ring finger, little finger.

4. System of any of the previous claims, wherein said recognizer is adapted to determine whether the finger is a finger from a left hand or from a right hand.

5. System of any of the previous claims, wherein said one key is meant to be part of a keyboard, and to be adjacent a number of other keys of said keyboard, each other key being coupled with at least a primary symbol,
wherein the plurality of symbols coupled with said one key comprises at least a primary symbol and the primary symbols of said other keys.

6. System of any of the previous claims, comprising a touch screen adapted for providing a soft key.

7. System of any of the previous claims, further comprising position determining means adapted to determine a position of a finger in the key area;
wherein said selector is further adapted for doing the selecting of a symbol of said plurality of symbols based on the determined position.

8. Method for inputting symbols, such as letters or numbers, using fingers, comprising:
providing a key coupled with a plurality of symbols;
determining a type of a finger pressing a key area coupled to said key;
selecting a symbol of said plurality of symbols based on the determined finger type.

9. Method of claim 8, wherein said determining a type of a finger is done using finger print identification.

10. Method of any of the claims 8-9, wherein the type of a finger pressing the key area is determined as being one of the following: thumb, index, middle finger, ring finger, little finger; and/or as belonging to a left hand or a right hand.

11. Method of any of the claims 8-10, wherein a keyboard comprising said one key is provided, said keyboard comprising a number of other keys adjacent said one key, each other key being coupled with at least a primary symbol, wherein the plurality of symbols coupled with said key comprises at least a primary symbol and the primary symbols of said other keys.

12. Method of any of the claims 8-11, wherein said key is provided on a touch screen.
Method of any of the claims 8-12, further comprising determining a position of a finger in the key area; and wherein said selecting of a symbol of said plurality of symbols is further based on the determined position.

13. System for inputting symbols, such as letters of numbers, using fingers, comprising:
a keyboard comprising a plurality of keys;
a recognizer adapted for determining, a type of a finger pressing a keyboard area coupled to said keyboard;
a selector adapted for selecting a symbol of a plurality of symbols associated with the plurality of keys based on the determined finger type.

14. System of claim 13, further comprising position determining means adapted to determine a position of a finger in the keyboard area; wherein said selector is further adapted for doing the selecting of a symbol of said plurality of symbols based on the determined position.

15. System of any of the previous claims, wherein a first key of said plurality of keys is adjacent a number of adjacent keys of said plurality of keys, each adjacent key being coupled with at least a primary symbol,
wherein the plurality of symbols coupled with said first key comprises at least a primary symbol and the primary symbols of said adjacent keys.
